# FASCICULE DE BREVET EUROPEEN

(11) **EP 0 849 196 B1**
(45) Date de publication et mention de la délivrance du brevet: **15.05.2002**
(21) Numéro de dépôt: 96870161.5
(22) Date de dépôt: 20.12.1996
(51) Int. Cl.: B65G 39/07, F16D 69/02

(54) **Garniture pour tambours ou poulies d'entraînement ou de renvoi pour bandes transporteuses**
Belag für Förderbandtreibwalze oder Riemenscheiben
Lining for conveyor belt driving drums or pulleys

(43) Date de publication de la demande: 24.06.1998
(73) Titulaire: TECHNIC GUM S.A., 7060 Soignies (BE); M.I.C.K.E. Brühmann GmbH & Co. KG, 47057 Duisburg (DE)
(72) Inventeur: Brühmann, Wolfgang Friedrich Wilhelm, 42799 Leichlingen (DE); Davidts, Emmanuel, 7190 Ecaussinnes (BE)
(74) Mandataire: Pieraerts, Jacques

(56) Documents cités:
- EP-A- 0 239 660
- DE-A- 2 061 554
- DE-A- 2 930 186
- DE-A- 3 344 653
- FR-A- 2 231 693
- FR-A- 2 298 732
- US-A- 1 330 988
- DATABASE WPI Section Ch, Week 8636 Derwent Publications Ltd., London, GB; Class A83, AN 86-236293 XP002030422 & JP 61 166 710 A (FUJIYOSHI K) , 28 Juillet 1986
- PATENT ABSTRACTS OF JAPAN vol. 012, no. 018 (M-660), 20 Janvier 1988 & JP 62 177359 A (ISHIZAKIGUMI:KK), 4 Août 1987,

## Description

La présente invention concerne une garniture pour tambours ou poulies d'entraînement ou de renvoi pour bandes transporteuses et toutes surfaces soumises à l'usure par friction.

Il est entendu que le terme "garniture" doit être pris dans son sens le plus large et que l'invention s'applique donc également à toute matière qui peut trouver application dans le transport ou le stockage de produits qui peuvent provoquer une usure causée par la friction ou le contact de produits en mouvement.

Dans le cas plus précis des tambours d'entraînement de bandes transporteuses qui sont à la base de la présente demande de brevet il sera observé que le rendement de tambours entraînant des bandes transporteuses peut être considérablement amélioré en garantissant un coefficient de friction élevé entre le tambour et la bande transporteuse tout en influençant favorablement la résistance à l'usure de ces deux composants. C'est pour cette raison qu'on a déjà équipé les tambours en question de garnitures comportant au moins partiellement des éléments en matière céramique et cela en vue d'augmenter le coefficient de friction responsable d'un bon contact entre la bande en caoutchouc naturel ou synthétique et le tambour.

Ceci est extrêmement important lorsque les bandes transporteuses travaillent à l'extérieur où l'humidité, l'eau, la boue, la glace et certains autres facteurs ont une influence défavorable sur le bon fonctionnement de l'installation.

L'eau et, en général, l'humidité ont une influence très défavorable sur le bon rendement d'une installation de transport constituée par une bande transporteuse, un tambour d'entraînement et plusieurs tambours auxiliaires, cela évidemment en raison d'un mauvais coefficient de friction entre les tambours et les bandes.

Toutes les garnitures de l'espèce doivent répondre aux exigences détaillées ci-dessous:
a) augmentation de l'adhérence entre le tambour et la bande transporteuse,
b) faible usure de la garniture,
c) faible usure de la bande transporteuse,
d) protection contre l'abrasion et les chocs des surfaces métalliques sur lesquelles ces garnitures sont appliquées.

Les garnitures connues, généralement utilisées à ce jour, sont fabriquées en caoutchoucs naturels ou synthétiques, en polyuréthanne ou en matières synthétiques équivalentes offrant une élasticité plus ou moins prononcée. Elles peuvent présenter des canaux ou rainures et être, ou non, recouvertes de plaquettes en céramique présentant généralement des aspérités. Les canaux ou rainures ont pour but d'évacuer le maximum d'eau et d'éviter l'effet d'aquaplanage lorsqu'on travaille dans des conditions de forte humidité ou d'eau abondante.

De même, le phénomène de glissement apparaît de façon très marquée lorsque la bande transporteuse travaille sous des conditions normales mais sous un angle important.

La présence de plaquettes céramiques à aspérités à la surface d'une garniture en caoutchouc améliore considérablement le coefficient de friction mais seulement aussi longtemps que les aspérités ou formes géométriques n'ont pas été rabotées par l'usure ou que les aspérités n'ont pas été colmatées par la boue, les poussières, etc. De toute manière, les garnitures présenteront des canaux ou des rainures permettant l'évacuation de l'eau.

Le document DE-A-29 30 186, qui est considére comme l'état de la technique le plus proche et qui constitue la base pour le preambule de la revendication 1, décrit une garniture dans laquelle sont ancrées des plaquettes avec une surface compacte et qui sont produites par frittage à une temperature élévée. Les documents EP-A-0 239 660 et JP-A-61166710 décrivent également le frittage comme procédé de production du materiau anti-dérapant.

L'invention a donc pour objet de réaliser des garnitures de tambours ou de poulies qui remédient aux inconvénients dont les principaux ont été décrits ci-dessus.

Pour réaliser cet objectif conformément à l'invention, la garniture selon l'invention est constituée d'une matière élastique dans laquelle sont incorporés des éléments céramiques poreux faisant saillie hors de la surface de la garniture.

Toujours selon l'invention, les éléments céramiques poreux précités sont répartis de manière à créer entre eux des canaux d'évacuation d'eau.

Une caractéristique remarquable de l'invention réside dans le fait que les éléments céramiques poreux sont constitués de particules liées entre elles tout en laissant subsister entre les particules des vides suffisant pour laisser pénétrer l'eau qui est ensuite évacuée sous l'effet de la force centrifuge.

L'expression "matière élastique" désigne ici un élastomère naturel ou synthétique polymérisé ou vulcanisé.

D'autres détails et avantages de l'invention ressortiront de la description qui sera donnée ci-après d'une garniture pour tambours ou poulie d'entraînement ou de renvoi pour bandes transporteuses, selon l'invention. Cette description n'est donnée qu'à titre d'exemple et ne limite pas l'invention. Les notations de référence se rapportent aux figures ci-jointes.

La figure 1 est une vue en coupe selon la ligne I-I de la figure 1.

La figure 2 est une vue en plan d'une garniture ou partie de garniture selon l'invention.

La garniture pour tambours d'entraînement, poulies de renvoi ou applications connexes peut se présenter sous la forme de plaques ou de bandes de dimensions variables.

La garniture 1 est constituée de toute matière élastique appropriée tels que divers caoutchoucs naturels ou synthétiques. Elle peut également être réalisée en une matière synthétique du type "polyuréthanne" ou une matière présentant des propriétés mécaniques analogues.

Dans la matière élastique 2 dont est constituée la garniture sont prévus des cavités 3 qui, aux figures, sont représentés sous la forme de rectangles, mais il est évident que ces cavités peuvent présenter les formes géométriques les plus diverses telles que des carrés des triangles, des cercles etc.

Dans les cavités 3 sont logés les éléments céramiques poreux 4. La matière céramique poreuse utilisée est constituée d'un ou plusieurs des composants ou combinaisons détaillées ci-après et citées à titre d'exemple en raison de leur grande résistance à l'usure. Ces composants sont l'oxyde d'aluminium ou de fer, l'oxyde de zirconium, l'oxyde de magnésium ou de chrome, le carbure ou le dioxyde de silicone, le nitrure de silicone ou leurs combinaisons, la poudre de quartz ou de zirconium, le graphite naturel, le kaolin, la poudre de schiste, le talc, le mica, des fibres telles que le titanite d'aluminium ou de potassium, le verre, la laine de verre et des matières granuleuses telles que le silicium grossier, la poudre grossière de caoutchouc et leurs équivalents techniques.

Les éléments céramiques poreux 4 sont obtenus par liage de particules céramiques à l'aide de liants polymériques, de liants organiques ou inorganiques, le rapport en pourcentage entre le liant et les particules céramiques varie de 1/99 à 99/1.

Les particules céramiques peuvent avoir été agglomérées par un procédé de concrétion.

Les éléments céramiques peuvent être noyés entièrement ou pratiquement entièrement dans la matière élastique dont est constituée la garniture. Par éléments céramiques noyés dans la matière élastique il faut entendre des éléments de forme géométrique quelconque dont la surface utile du point de vue friction affleure la surface de la matière élastique et qui sont ancrés dans cette matière, soit en raison de leur profil approprié, soit grâce à l'intervention de moyens mécaniques.

Dans une forme de réalisation représentée à la figure 2, ces éléments céramiques font saillie au-dessus de la matière élastique constituant l'essentiel de la garniture. Les éléments céramiques poreux font alors largement saillie en dehors de la matière élastique et sont retenus par cette matière par des moyens classiques connus de l'homme de métier et/ou être entourés par cette matière élastique comme le représente la figure 2. Sur cette figure chaque élément céramique poreux est retenu latéralement par des parois 3 en matière élastique. Ces parois latérales 3 apparaissent au cours de l'opération de moulage.

La matière élastique qui forme une paroi 3 entourant partiellement les éléments céramiques 4 résulte d'une opération de moulage au cours de laquelle a été formée la garniture, les éléments céramiques, réalisés dans un stade antérieur, ayant été disposés selon un réseau géométrique dans le moule.

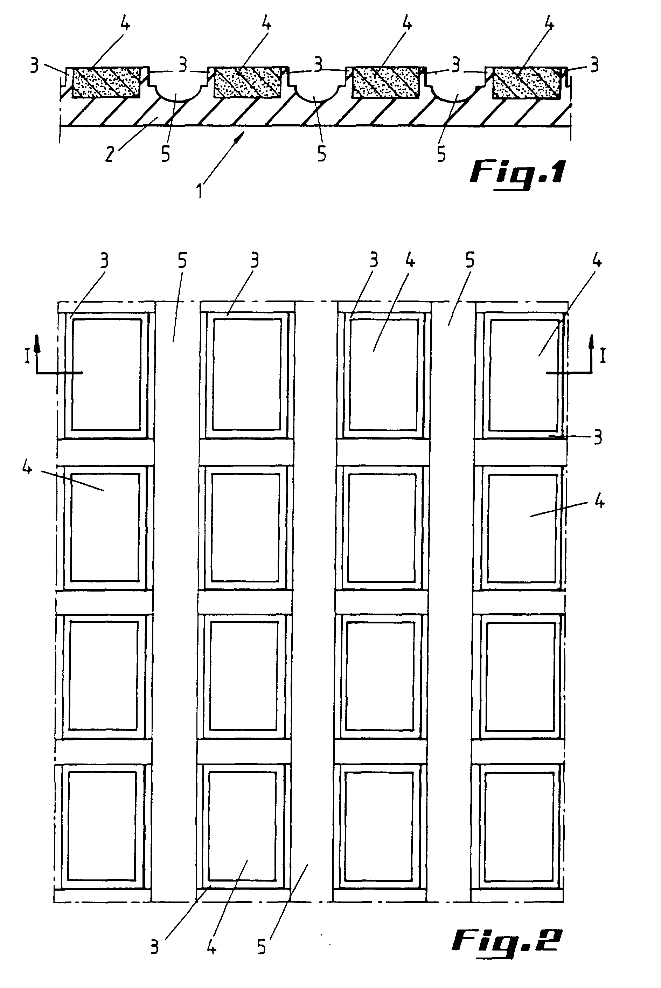

On remarque aux figures 1 et 2 les canaux 5 qui séparent les rangées d'éléments céramiques 4 et sont conçus pour accélérer l'évacuation de l'eau en vue d'éviter l'effet dit "d'aquaplanage" entre le tambour et la bande transporteuse. Le profil de ces canaux et l'angle qu'il forme avec l'axe géométrique du tambour sont variables et seront définis en fonction de circonstances particulières. La formation de divers réseaux particuliers est donc possible.

En fonctionnement, les éléments céramiques 4 sont appliqués fortement sur la bande transporteuse. La tension de la bande transporteuse crée une certaine pression sur la surface de la garniture et fait gicler l'eau qui s'est accumulée entre la garniture et le tambour.

Les éléments céramiques poreux augmentent considérablement le coefficient de friction entre le tambour et la bande convoyeuse grâce à leur surface capable de produire un effet comparable à celui d'une pierre de grès. Cet effet combiné à celui qui résulte de la disposition au hasard des particules formant les éléments céramiques permet à la garniture de mieux agripper la surface du tambour. En effet, les éléments céramiques de la garniture pénètrent à un certain point dans la surface en caoutchouc légèrement plus tendre de la bande transporteuse et cela pendant le court moment de contact entre le tambour et la bande.

Le résultat est une élimination totale de l'eau présente entre ces deux éléments essentiels de l'installation de transport et cela en raison de la force centrifuge provoquée par le tambour en rotation. L'eau est également éliminée grâce à la présence des canaux 5 dont la disposition sera étudiée en vue de réaliser cette évacuation de l'eau la plus efficace possible. Ceci est en effet un des objets essentiels de la présente demande de brevet.

Les éléments céramiques 4 qui sont noyés ou incrustés dans la matière élastique pour faire plus ou moins saillie en dehors de la surface de la matière élastique 2 sont réalisés à partir de très nombreux composants dont les principaux sont cités ci-après. Ces composants qui peuvent être utilisés séparément ou en divers mélanges sont les suivants: l'oxyde d'aluminium ou de fer, l'oxyde de zirconium, l'oxyde de magnésium ou de chrome, le carbure ou le dioxyde de silicone, le nitrure de silicone ou leurs combinaisons, la poudre de quartz ou de zirconium, le graphite naturel, le kaolin, la poudre de schiste, le talc, le mica, des fibres telles que le titanite d'aluminium ou de potassium, le verre, la laine de verre et des matières granuleuses telles que le silicium grossier, la poudre grossière de caoutchouc et leurs équivalents techniques.

Ces composants peuvent être liés entre eux à l'aide d'une composition comprenant un liant du type résine Epoxy-A bisphénolique et d'un durcissant tel qu'un polyamine aliphatique/cycloaliphatique. On peut également obtenir le même résultat un utilisant une résine sous forme d'A-epoxy bisphénolique, le durcissant étant dans ce cas un dicyandiamide.

Le rapport entre le liant et la matière céramique détermine les caractéristiques du produit fini du point de vue du coefficient de friction, de la porosité, de la résistance à l'usure, de la dureté, de la densité, etc.

C'est ainsi que plus de liant augmente et moins de liant diminue les valeurs précitées à l'exception cependant de la friction et de la porosité. En diminuant la quantité de liant on augmente le coefficient de friction et la porosité.

Des coefficients de friction plus élevés, supérieurs à 0,8 µ sont obtenus grâce à un pourcentage de liant qui se situe entre 5 et 20 %. Des coefficient moyennement élevés, situés aux environs de µ = 0,35-0,5 sont obtenus grâce à un pourcentage de liant de 25 à 45 %, des coefficients moyennement faibles, se situant aux environs de µ = 0,2-0,3 sont obtenus par un pourcentage de liant situé entre 50 et 65 %. Dans le cas de coefficients faibles, µ = 0,1-0,2 on utilise 70 à 95 % de liant.

Des exemples de formules correspondant à quatre types de coefficients de friction sont donnés ci-dessous:

| 1) Coefficient de friction élevé | |
|---|---|
| kyanite grossière | 10 % |
| oxyde d'aluminium grossier | 30 % |
| sable de zirconium moyen | 15 % |
| verre de borosilicate grossier | 30 % |
| déchets de caoutchouc grossier | 5 % |
| wollastonite sous forme d'aiguilles | 10 % |
| | liant 15 % |

| 2) Coefficient de friction moyen à élevé | |
|---|---|
| poudre de quartz grossière | 10 % |
| poudre de quartz fine | 10 % |
| oxyde d'aluminium moyen | 20 % |
| fer-aluminosilicate de verre (grossier) | 25 % |
| déchets de caoutchouc moyens | 15 % |
| graphite synthétique grossier | 5 % |
| fibre d'alumino-titanite | 5 % |
| granite moyen | 10 % |
| | liant 35 % |

| 3) Coefficient de friction moyen à faible | |
|---|---|
| poudre de quartz fine | 7,5 % |
| poudre de quartz grossière | 7,5 % |
| poudre de zirconium fine | 10 % |
| verre de borosilicate moyen | 15 % |
| graphite synthétique fine | 10 % |
| kaolin moyen | 20 % |
| poudre de schiste fine | 20 % |
| fibre de laine de roche | 10 % |

| 4) Coefficient de friction faible | |
|---|---|
| poudre de quartz fine | 5 % |
| carbure de silicium fine | 15 % |
| fibre de titanite de potassium | 15 % |
| talc fin | 15 % |
| craie fine | 10 % |
| mica fin | 15 % |
| graphite naturel fin | 15 % |
| fibre de verre broyée | 10 % |
| | liant 85 % |

Il résulte de la description qui vient d'être donnée d'une garniture comportant des éléments céramiques selon l'invention que, non seulement les qualités de celle-ci sont considérablement augmentées dans les domaines décrits plus haut, mais que les caractéristiques et les propriétés de ces éléments céramiques peuvent varier dans de larges proportions pour répondre à des besoins spécifiques.

## Revendications

1. Garniture pour tambour ou poulie d'entraînement ou de renvoi pour bandes transporteuses et toutes surfaces soumises à l'usure par friction, constituée d'une matière élastique dans laquelle sont ancrées des plaquettes à base de céramique faisant saillie hors de la surface de la garniture, **caractérisée en ce que** les plaquettes sont poreuses et elles comprennent des particules céramiques liées entre elles par un liant polymérique ou organique.

2. Garniture selon la revendication 1, **caractérisée en ce que** le pourcentage de liant organique est compris entre 5 et 20%.

3. Garniture selon la revendication 1 ou 2, **caractérisée en ce qu'**elle a un coefficient de friction >0,8 µ.

4. Garniture selon l'une des revendications précédentes, **caractérisée en ce que** la matière élastique comprend des cavités de forme géométrique dans lesquelles les plaquettes sont ancrées, lesdites cavités étant disposées en rangées de façon à constituer des canaux d'évacuation d'eau entre les plaquettes.

5. Garniture selon l'une des revendications précédentes, **caractérisée en ce que** les particules liées entre elles laissent subsister entre elles des vides suffisants pour laisser pénétrer l'eau qui est ensuite évacuée sous l'effet de la force centrifuge.

6. Garniture selon l'une des revendications précédentes, **caractérisée en ce que** les plaquettes céramiques poreuses présentent une des formes géométriques régulières comprises entre un carré et un disque.

7. Garniture selon l'une des revendications 1-6, **caractérisée en ce que** les plaquettes céramiques poreuses sont constituées d'un ou plusieurs des composants suivants : l'oxyde d'aluminium ou de fer, l'oxyde de zirconium, l'oxyde de magnésium ou de chrome, le carbure ou le dioxyde de silicium, le nitrure de silicium ou leurs combinaisons, la poudre de quartz ou de zirconium, le graphite naturel, le kaolin, la poudre de schiste, le talc, le mica, des fibres telles que le titanite d'aluminium ou de potassium, le verre, la laine de verre et des matières granuleuses telles que le silicium grossier, la poudre grossière de caoutchouc et leurs équivalents techniques.

8. Garniture selon la revendication 7, **caractérisée en ce que** les composants précités sont réunis entre eux par une composition comprenant un liant du type résine Epoxy-A bisphénolique et un durcissant tel qu'une polyamine aliphatique/cycloaliphatique.

9. Garniture selon la revendication 7, **caractérisée en ce que** les composants sont réunis entre eux par une résine sous forme de poudre tel qu'une résine solide Epoxy-A bisphénolique.

## Claims

1. A lining for a driving or return drum or pulley for conveyor belts and all surfaces subject to wear by friction, comprising an elastic material in which are anchored ceramic-based platelets projecting from the surface of the lining, **characterised in that** the platelets are porous and they comprise ceramic particles bound to one another by a polymeric or organic binder.

2. A lining according to claim 1, **characterised in that** the percentage of organic binder is between 5 and 20 %.

3. A lining according to claim 1 or 2, **characterised in that** it has a coefficient of friction of >0.8 µ.

4. A lining according to any one of the preceding claims, **characterised in that** the elastic material comprises cavities of geometrical shape in which the platelets are anchored, said cavities being disposed in rows so as to form water removal channels between the platelets.

5. A lining according to any one of the preceding claims, **characterised in that** the bound-together particles leave between them voids which are sufficient to allow water to penetrate, which is then removed under action of centrifugal force.

6. A lining according to any one of the preceding claims, **characterised in that** the porous ceramic platelets have one of the regular geometrical shapes comprised between a square and a disc.

7. A lining according to any one of claims 1 to 6, **characterised in that** the porous ceramic platelets are composed of one or more of the following components: aluminium or iron oxide, zirconium oxide, magnesium or chromium oxide, silicon carbide or dioxide, silicon nitride or combinations thereof, quartz or zirconium powder, natural graphite, kaolin, shale powder, talcum, mica, fibres such as aluminium or potassium titanite, glass, glass wool and granular material, such as coarse silicon, coarse rubber powder and their technical equivalents.

8. A lining according to claim 7, **characterised in that** said components are joined together by a composition comprising a binder of bisphenolic A epoxy resin type and a hardener, such as an aliphatic/cycloaliphatic polyamine.

9. A lining according to claim 7, **characterised in that** the components are joined together by a resin in powder form, such as a solid bisphenolic A epoxy resin.

## Patentansprüche

1. Bezug für eine Treibwalze oder eine Rückführwalze oder eine Treibriemenscheibe oder eine Rückführriemenscheibe für Förderbänder und alle Oberflächen, welche der Abnutzung durch Reibung unterliegen, gebildet aus einem elastischen Material, in welchem Plättchen auf Keramikbasis verankert sind, welche von der Oberfläche des Bezugs hervorstehen, **dadurch gekennzeichnet, dass** die Plättchen porös sind und keramische Partikel aufweisen, welche untereinander durch ein polymerisches oder organisches Bindemittel verbunden sind.

2. Bezug nach Anspruch 1, **dadurch gekennzeichnet, dass** der Anteil des organischen Bindemittels zwischen 5 und 20% liegt.

3. Bezug nach Anspruch 1 oder 2, **dadurch gekennzeichnet, dass** er einen Reibungskoeffizienten von >0,8 µ hat.

4. Bezug nach einem der vorangehenden Ansprüche, **dadurch gekennzeichnet, dass** das elastische Material Hohlräume mit einer geometrischen Gestalt aufweist, in welchen die Plättchen verankert sind, wobei die Hohlräume in Reihen angeordnet sind, um Kanäle für die Abführung von Wasser zwischen den Plättchen auszubilden.

5. Bezug nach einem der vorangehenden Ansprüche, **dadurch gekennzeichnet, dass** sich zwischen den untereinander verbundenen Partikeln Lücken befinden, die ausreichend sind, um Wasser hindurchtreten zu lassen, welches dann unter Einwirkung der Zentrifugalkraft abgeleitet wird.

6. Bezug nach einem der vorangehenden Ansprüche, **dadurch gekennzeichnet, dass** die porösen keramischen Plättchen eine regelmäßige geometrische Form aufweisen,und zwar entweder ein Viereck oder eine Scheibe bilden.

7. Bezug nach einem der Ansprüche 1 bis 6, **dadurch gekennzeichnet, dass** die porösen keramischen Plättchen aus einem oder mehreren der folgenden Elemente bestehen: Aluminium- oder Eisenoxid, Zirkoniumoxid, Magnet- oder Chromoxid, Siliziumdioxid oder Siliziumkarbid, Siliziumnitrid oder Kombinationen daraus, Quarzpulver oder Zirkoniumpulver, natürliches Grafit, Kaolin, Schieferpulver, Talkum, Mika, Fasern wie beispielsweise Aluminium- oder Kaliumtitanit, Glas, Glasfasern und körnige Materialien, wie beispielsweise grobes Silizium, grobes Gummipulver und ihre technischen Äquivalente.

8. Bezug nach Anspruch 7, **dadurch gekennzeichnet, dass** die vorgenannten Elemente untereinander verbunden sind durch eine Zusammensetzung mit einem Bindemittel vom Typ des bisphenolischen Epoxy-A-Kunstharzes und mit einem Aushärtemittel wie beispielsweise einem aliphatischen/zykloaliphatischen Polyamin.

9. Bezug nach Anspruch 7, **dadurch gekennzeichnet, dass** die Elemente untereinander durch ein Kunstharz in Pulverform, wie beispielsweise ein festes bisphenolisches Epoxy-A-Kunstharz verbunden sind.
